Europäisches Patentamt

**European Patent Office**

Office européen des brevets

(11) Publication number: **0 004 739**
A2

(12)

# EUROPEAN PATENT APPLICATION

(21) Application number: 79300493.8

(22) Date of filing: 27.03.79

(51) Int. Cl.²: **C 08 F 10/00**
**C 08 F 4/60, C 08 F 4/72**
**C 08 F 4/02**

(30) Priority: 27.03.78 US 890324

(43) Date of publication of application:
17.10.79 Bulletin 79/21

(84) Designated Contracting States:
BE DE FR GB IT NL

(71) Applicant: Exxon Research and Engineering Company
P.O. Box 390
Florham Park New Jersey 07932(US)

(72) Inventor: Langer, Arthur Walter, Jr.
175 Oakwood Road
Watchung New Jersey(US)

(74) Representative: Field, Roger Norton et al,
15 Suffolk Street
London SW1Y 4HS(GB)

(54) Catalysts for olefin polymerisation comprising transition metal halide, organo metal compound and Lewis base.

(57) Catalysts suitable for alpha olefinic polymerisation comprise (a) a Group IVA to VIII transition metal halide (e.g. $TiCl_4$) (b) a compound of the formula $T_nMR'_{3-n}$ where $n = 1$ or 2, T is $R_3DCH_2$, D being Si, Ge or Sn, M is Al, Ga or In, R is Me or Et and R' is $C_1$-$C_8$ primary alkyl, aralkyl or H (e.g. $Me_3SiCH_2)_2AlEt)$ and (c) a Lewis base (e.g. ethyl benzoate).

EP 0 004 739 A2

- 1 -

0004739

It is well known in the art to use an alkyl metal compound of Groups I-III in combination with a transition metal compound of Groups IVA-VIII as a catalyst system for olefinic polymerization. While nearly all of the alkyl metal compounds are effective for the polymerization of ethylene, only a few are effective for the preparation of isotactic polymers of propylene and higher alpha-olefins and only $Et_2AlCl$ and $AlEt_3$ have any important commercial utility.

A major cost involved in the polymerization of the alpha-olefins is the cost of the catalyst components. Therefore, the cost of the manufacture of the polymer can be effectively reduced by the use of catalyst systems having a higher polymerization activity. A further concern is the ability to produce polymers having a minimum amount of catalyst residues thereby eliminating a costly deashing operation. A still further concern is the ability to produce polymers having a high degree of isotactic stereoregularity thereby enabling the manufacturer to eliminate the costly operation involving the removal and separation of atactic polymer from the isotactic polymer. The improved catalyst system of the present invention provides a means for the manufacturer to obtain these desirable realizations.

The catalyst system of the present invention which can be employed i alpha-olefin polymerizations comprises a Group IVA-VIII transition metal compound, at least one Lewis base and a metal compound having the formula $T_n MR'_{3-n}$ wherein T is $R_3 DCH_2$, D being Si, Ge or Sn, preferably Si, R is methyl or ethyl, preferably methyl, M is aluminum, gallium or indium, preferably Al and R' is a $C_1-C_8$ primary alkyl group, an aralkyl group or hydrogen, for example ethyl, octyl, benzyl, isobutyl, but is preferably $C_2-C_4$ primary alkyl or hydrogen, and n is 1 or 2.

The transition metal catalyst compound is a Group IVA-VIII transition metal halide, wherein the halide group may be chloride or bromide and the transition metal halide can be in the form of solid crystalline compounds, solid solutions or compositions with other metal salts or supported on the surface of a wide range of solid supports. For highest stereospecificity it is desirable to have the transition metal halide, or its support composition, in the layer lattice structure with very small crystallites, high surface area, or sufficient defects or foreign components to facilitate high dispers during polymerization. The transition metal halide may also contain various additives such as Lewis bases, pi bases, polymers, or organic or inorganic modifiers. Vanadium and titanium halides such as $VCl_3$, $VBr_3$, $TiCl_3$, $TiCl_4$, $TiBr_3$ or $TiBr_4$ are preferred, most preferably $TiCl_3$ or $TiCl_4$ and mixtures thereof. The most preferred $TiCl_3$ compounds are those which contain $TiCl_4$

edge sites on the layer lattice support such as alpha, delta, or gamma $TiCl_3$ or various structures and modifications of $TiCl_3$ or $MgCl_2$. The most preferred $TiCl_4$ compounds are those supported on chloride layer lattice compounds such as $MgCl_2$. Minor amounts of other anions may also be present as a substitute for chloride, such as other halides, pseudo-halides, alkoxides, hydroxides, oxides or carboxylates. Mixed salts or double salts such as $K_2TiCl_6$ or $MgTiCl_6$ can be employed alone or in combination with electron donor compounds. Other supports besides $MgCl_2$ which are useful are hydroxychlorides, oxides or other inorganic or organic supports. The most preferred transition metal compound is the transition metal halide — $TiCl_4$ on an $MgCl_2$ support.

The Lewis bases are employed in the combination with the tri- or dialkyl metal organo compound of Al, Ga or In, and the Group IVA-VIII transition metal halide as long as they do not cause excessive cleavage of metal-carbon bonds, or loss of active sites. Suitable Lewis bases include tertiary amines, esters, phosphines, phosphine oxides, phosphates (alkyl, aryl), phosphites, hexaalkyl phosphoric triamides, dimethyl sulfoxide, dimethyl formamide, secondary amines, dialkyl ethers, epoxides, saturated and unsaturated heterocycles, or cyclic ethers and mixtures thereof. Typical but non-limiting examples are ethyl-benzoate, diethyl ether or tetrahydrofuran. The most preferred is ethylbenzoate.

Magnesium salts may also be employed with the present catalysts if they are partially or wholly solubilized by reaction with the alkyl metal component. Non-limiting examples include $MgBr_2$, $ClMgOR''$, $R''OMgOOCR''$, $Mg(OR'')_2$, and the like, where R'' is the same or different $C_1$ to $C_{10}$ alkyl.

The alkyl metal cocatalysts of the invention have the general formula $T_nMR'_{3-n}$ wherein n = 1 or 2, T is $R_3DCH_2$, D being Si, Ge or Sn, preferably Si, R being methyl or ethyl, preferably methyl, M is aluminum, gallium or indium and R' is $C_1-C_8$ primary alkyl or aralkyl including unhindered branched groups such as ethyl, octyl, benzyl, isobutyl, or hydrogen, preferably $C_2-C_4$ primary alkyl or H. Especially suitable cocatalysts are $Me_3SiCH_2AlEt_2$, $(Me_3SiCH_2)_2AlEt$, $(Me_3SiCH_2)_2Aln-Bu$ or $Me_3SiAlCH_2Et$ (Octyl) wherein $(Me_3SiCH_2)_2AlEt$ is preferred. The most preferred compounds have the formula $T_2AlR'$.

For use with the alkyl metal cocatalysts of this invention, the most preferred transition metal compounds contain $TiCl_4$ supported on $MgCl_2$ and one or more Lewis bases.

The molar ratio of the alkyl metal cocatalyst to the transition metal compound is 0.5:1 to 50:1, more preferably 1:1 to 20:1, and most preferably 5:1 to 10:1. The number of moles of Lewis base to organometal compound can vary widely but is preferably 0.1:1 to 1:1.

The catalyst system of the invention enables the process for making alpha-olefin polymers having a high degree of isotactic stereoregularity to be carried out at a temperature of 25° to 150°C., more preferably 40° to about 80°C., at pressures of 1 atm. to 50 atm. The reaction time for polymerization is about 0.1 to 10 hours, more preferably 0.5 to 3 hours. Due to the high catalyst activity, shorter times and temperatures below 80°C. can be readily employed.

The reaction solvent for the system can be any inert paraffinic, naphthenic or aromatic hydrocarbon such as benzene, toluene, xylene, propane, butane, pentane, hexane, heptane, cyclohexane, and mixtures thereof. Preferably, excess liquid monomer is used as solvent. Gas phase polymerizations may also be carried out with or without minor amounts of solvent.

Typical, but non-limiting examples of $C_2$-$C_{20}$ alpha-olefinic monomers employed in the present invention for the manufacture of homo-, co- and terpolymers are ethylene, propylene, butene-1, pentene-1, hexene-1, octadecene-1, 3-methylbutene-1, styrene, vinylidene norbornene, 1,5-hexadiene and the like and mixtures thereof. Isotactic polymerization of propylene and higher olefins is especially preferred.

The alkyl metal cocatalyst and the transition metal compound in combination with the Lewis base can be added separately to the reactor but are preferably premixed before addition to the reactor. Employing non-hindered alkyl metal compounds with the transition metal compound does not provide the improved catalyst efficiency and stereospecificity as envisioned in this application. The concentration of the transition metal based on solvent in the reaction zone is 0.001 to 5mM, preferably less than 0.1mM.

The advantages of the unique and novel catalyst system and the novel process for the alpha-olefin polymerizations of the present invention can be more readily appreciated by reference to the following Example and table.

EXAMPLE

A sample of $(Me_3SiCH_2)_2AlEt$ was prepared by reacting 2 moles of $Me_3SiCH_2Li$ with 1 mole of $AlEtCl_2$, treating the product with dry powdered KCl to remove unreacted chloroaluminum compounds and vacuum fractionating the liquid phase. One of the distillation cuts (35 wt. % in deuterobenzene plus $C_6H_6$) gave the correct NMR spectrum for the desired product ($\delta$ C-CH$_3$ = 1.17 ppm; $\delta$ SiCH$_3$ = 0.16 ppm; $\delta$ SiCH$_2$ = -0.41 ppm calculated from benzene reference).

$Me_3SiCH_2AlEt_2$ was made by mixing equimolar amounts of $(Me_3SiCH_2)_2AlEt$ and $AlEt_3$.

The above alkyl aluminum compounds were used as cocatalysts with a catalyst prepared by reacting anhydrous $MgCl_2$ (5 moles) with $TiCl_4 \cdot C_6H_5COOEt$ (1 mole) in a ball mill 4 days, followed by a neat $TiCl_4$ treat at 80°C., 2 hours, heptane washes and vacuum drying. The catalyst contained 3.44% Ti. Using 1 mmole cocatalyst and 0.2g catalyst in 500 ml. n-heptane, propylene was polymerized at 65°C., 1 hour at 765-770 mm. The results are compared in Table I with those obtained using the conventional $AlEt_3$ cocatalyst.

TABLE I

| Run | Al Alkyl | Rate g/g Cat/hr | % HI[a] | I.V.[b] |
|-----|----------|-----------------|---------|---------|
| A | $AlEt_3$ | 244 | 83.1 | 2.25 |
| B | $Me_3SiCH_2AlEt_2$ | 182 | 90.8 | 3.00 |
| C | $(Me_3SiCH_2)_2AlEt$ | 140 | 92.9 | 3.30 |

(a) Percent insoluble in boiling n-heptane.

(b) Inherent viscosity determined at 0.5g polymer per liter decahydronaphthalene at 135°C.

The polypropylene isotacticity increased substantially when ethyl groups were replaced by trimethylsilylmethyl groups. In Run C, the rate was about seven times that of the commercial $Et_2AlCl/TiCl_3 \cdot 1/3AlCl_3$ catalyst at the same heptane insolubles.

Since many modifications and variations of this invention may be made without departing from the spirit or scope of the invention thereof, it is not intended to limit the spirit or scope thereof to the specific examples thereof

0004739

WHAT WE CLAIM IS:

1. A catalyst composition which comprises a mixture of:

(a) Group IVA to VIII transition metal halide;

(b) at least one metal alkyl cocatalyst having the formula $T_n MR'_{3-n}$ wherein n = 1 or 2, T is $R_3 DCH_2$, D being Si, Ge or Sn and M being Al, Ga or In, R is a methyl or ethyl group and R' is a $C_1-C_8$ primary alkyl group, an aralkyl group including unhindered branched groups or hydrogen; and

(c) at least one Lewis base.

2. A composition according to claim 1 wherein M is aluminum.

3. A composition according to either of claim 1 and 2 wherein D is Si.

4. A composition according to any one of the preceding claims wherein the halide of the transition metal halide is chloride, bromide or a mixture thereof.

5. A composition according to any one of the preceding claims wherein the transition metal halide is a halide of trivalent titanium, ttivalent vanadium or tetravalent titanium.

6. A composition according to any one of the preceding claims wherein said transition metal halide is supported on a support.

7. A composition according to claim 6 wherein said support is $MgCl_2$.

8. A composition according to any one of the preceding claims wherein said Lewis base is an amine, ester, phosphine, phosphine oxide, phosphate or ether.

9. A composition according to claim 8 wherein said Lewis base is ethyl benzoate.

10. A composition according to any one of the preceding claims wherein said alkyl metal cocatalyst is $Me_3SiCH_2AlEt_2$, $(Me_3SiCH_2)_2AlEt$, $(Me_3SiCH_2)_2Al n-Bu$, or $Me_3SiCH_2AlEt$ (Octyl).

11. A composition according to any one of the preceding claims wherein the molar ratio of said alkyl metal cocatalyst to the transition metal is about 0.5:1 to about 50:1.

12. A process for the polymerization of a $C_2$ to $C_{20}$ olefin monomer or a mixture thereof to solid homo-, co-, or terpolymers by contacting olefin monomer with a catalyst composition according to any one of the preceding claims.